# EUROPEAN PATENT APPLICATION

(11) **EP 1 596 565 A1**
(43) Date of publication of application: **16.11.2005**
(21) Application number: 04011451.4
(22) Date of filing: 13.05.2004
(51) Int. Cl.: H04M 3/436, H04Q 7/38, H04Q 7/22

(54) **Call and message filtering**

(71) Applicant: SIEMENS AKTIENGESELLSCHAFT, 80333 München (DE)
(72) Inventor: Patil, Vikram, 560078 Bangabore (IN)

(57) **Abstract**

The invention suggests a method for filtering a call and/or message via telecommunication network to a called party with a telephone number (+49 172 3300001), characterized in that if a call and/or message filtering for a call and/or message to the telephone number (+49 172 3300001) of the called party is activated but a call and/or message filtering for a call and/or message to an other number (+49 172 3300001 1234) of the called party, comprising the telephone number (+49 172 3300001) and an additional number ("1234"), is deactivated, a call and/or message to the telephone number (+49 172 3300001) is blocked,
whereas a call and/or message to the other number (+49 172 3300001 1234) is not blocked.

The method and a device improve handling of unwanted a call and/or messages, especially calls or messages.

## Description

The invention concerns methods and devices for handling mobile calls or messages that a called party does not want to receive.

Today a called party with e.g. a cellular mobile station has for not receiving unwanted calls or messages the choices to switch the mobile station off or refusing unwanted calls or deleting unwanted messages.

With mobile traffic increasing, mobile users would require a high degree of control on the calls they receive and hence the pronounced need for services like identification of calling Party (CLIP) and calling line restriction (CLIR). Unwanted ("Junk") calls when received in certain quantities can overwhelm or disturb a receiving user. Unwanted calls when received costs the user an added expense and sometimes worst his valuable attention. CLIP Service which is free in many countries can be a source of unwanted calls or messages. It not only reveals the mobile numbers to the called users but also opens a window for unwanted or junk calls.
Other causes for an increase of unwanted calls or messages can be commercialization of Internet and online buying/selling including filling of web forms etc increasing fast, as online transaction require the entry or revealing the buyers or sellers mobile number (may be for mandatory reasons or for ease of use or just in case), enabling unwanted calls or message from wherever.

It is an object of the invention to efficiently improve handling of unwanted a call and/or messages, especially calls or messages. The object is achieved respectively by the independent claims.

The method according to the invention allows efficiently improve handling of unwanted a call and/or message, especially calls or messages by using and other number than a called party's telephone number, which other number is the called party's telephone number plus an extension (additional number). Thus the calls to the called party's telephone number can all be blocked but any calling party knowing the additional number can dial it and thus nevertheless reach the called party.

The technique addressed in the following sections helps the mobile user to customize virtual-MSISDN(s) (virtual Mobile Subscriber ISDN Numbers which are not MSISDN numbers but which can be used as if they were MSISDN numbers thus enabling call filtering) and receive calls only on those virtual (or "logical") numbers. Not only does this technique filter unwanted calls efficiently but it also allows the user to call anyone without revealing the complete identity of the logical numbers.

The registering and de- registering of additional numbers ("1234" etc) for a user's telephone number (+49 172 3300001 etc) can especially be done by USSD messages or SMS messages etc from him to a telephone network (e.g. to his home telephone network home register HLR etc).

Further details of the invention are described in the following explanation of the drawings.
- Fig. 1: shows a user (called party) being called by various calling parties,
- Fig. 2: shows a user registering an additional number /other number for his telephone number in a home location register,
- Fig. 3: shows a user (called party) being called by calling parties under his telephone number or under his other number,
- Fig. 4: shows a user (called party) being called by various calling parties with de-activated call filtering,
- Fig. 5: shows a call from only one calling party being blocked,
- Fig. 6: shows calls from only two calling party being blocked.

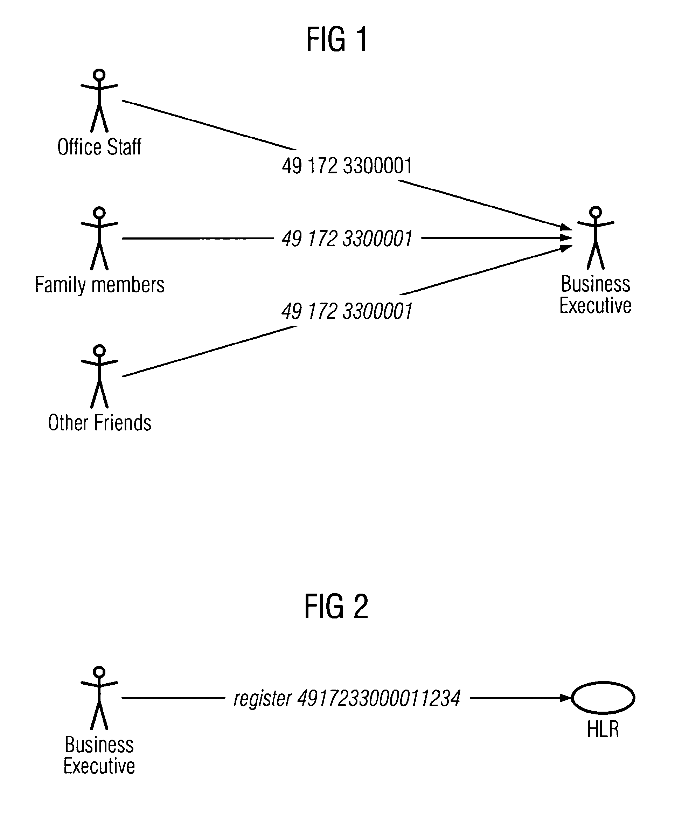

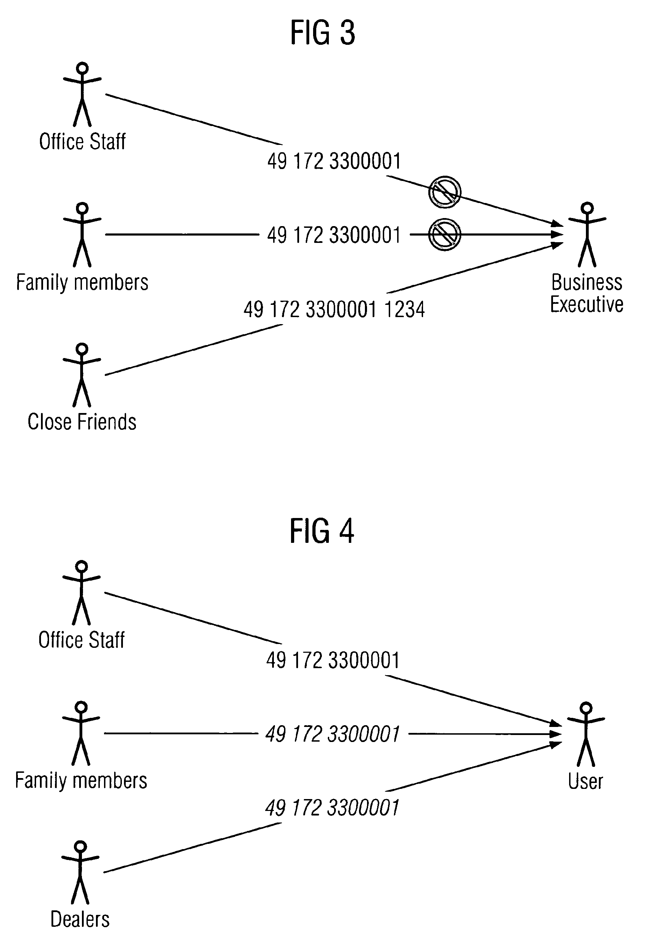

A user (a potential called party), e.g. a business executive going on vacation shown in figure 1, does not want to receive any business calls or messages from (calling parties being) business partners. He wants only his close friends to call him and other members must not disturb him. He registers an add-on MSISDN 4917233000011234 and distributes it to e.g. only close friends who (only) can call him as shown in figure 3 whereas other calls are blocked.

According to Fig. 2, the user registers the above number in the HLR (Home Location Register), using e.g. the Standard USSD (Unstructured Supplementary Service Data) string request. An USSD application on the HLR will register this as the forwarded-to-number (Ftno) of an Operator configured national supplementary Service.

The use case in figure 3 depicts the call filtering scenario wherein all calls on basic MSISDN fail to reach the user. The MTC (Mobile Terminating Call) functionality of the HLR is enhanced to evaluate the called Party number and reject the calls for the basic MSISDN (original MSISDN) if the user has registered the add-on MSISDN number.

When a Business Executive returns from his vacation, he deactivates his other number (+49 172 3300001 1234, here also named "add-on MSISDN number") using similar procedures based on USSD. The user will now receive calls on his telephone number (+49 172 3300001, here also named "basic MSISDN") only.

Use Case2 according to figure 4:
A scenario is analyzed in the following wherein a user wants to sell his car or property etc. He gives an advertisement in the media with his basic MSISDN. Many interested calling parties call up and try to talk about the deal. But once the deal is done the user might still receive calls regarding the sale for a few more days. Thus the calls after the deal are unwanted.

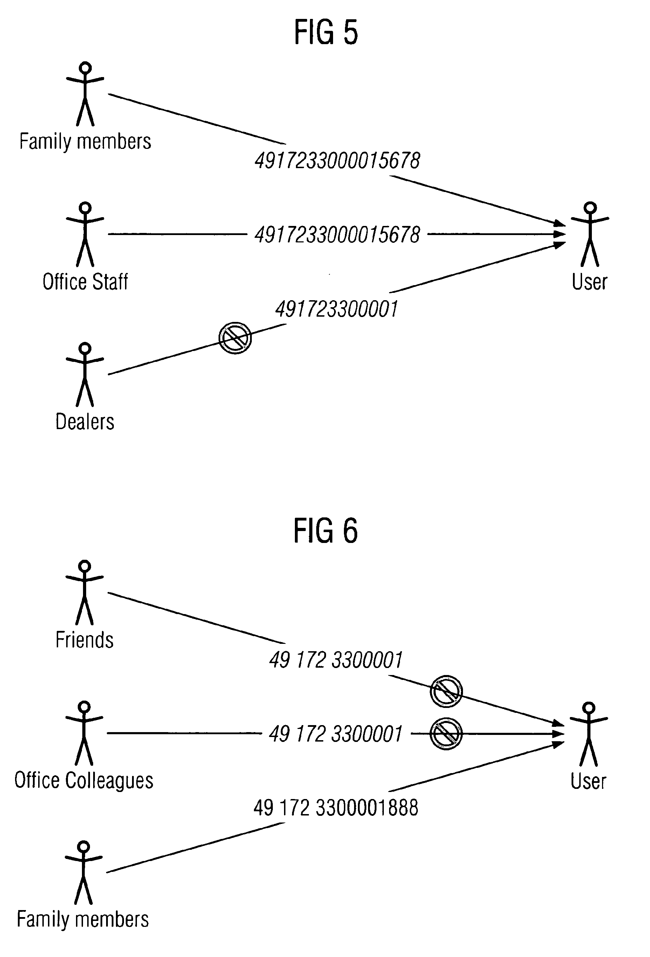

To avoid this the user has to activate the add-on MSISDN number and distribute it to friends and relatives and receive calls only on this number. All the unwanted calls can be avoided for temporary duration according to figure 5.

The user can deactivate his add-on MSISDN(s) after few days and again use the basic MSISDN, as the degree of unwanted calls received will then be nil or very low. This use case holds true in scenarios like online shopping, filling of web forms etc where you expose your basic MSISDN and you receive unwanted calls even after online work is completed.

### Use case3:

An additional use of this feature during roaming Situation is explained below.
When a user goes outside his Home PLMN network the roaming Charge will be incurred by the user for all the incoming calls. Any unwanted calls while roaming are costly to the User.
A user can distribute an add-on MSISDN to his family members and close friends before roaming to other network. E.g. 49 772 3300001 888 is registered in the HLR as discussed in the above two use cases using the USSD interfaces.

As depicted above in the figure 6 all calls on Basic MSISDN are barred and user can escape receiving calls on basic MSISDN while roaming to avoid the additional roaming costs.

But at the same time calls on add-on MSISDN will be successful.

In e.g. the above example of a business executive, before going for vacation he registers the add-on MSISDN 4917233000011234 in the HLR. The HLR stores this customized dialing number in the corresponding subscriber record.
When his close friends call him using his add-on MSISDN number, the GMSC (Gateway MSC) must route this call to the HLR. The HLR must then read the subscriber record using the Basic MSISDN, which is part of the called Party number.
In the subscriber record, call-filtering Service is active or not is checked. If active and the called Party number matches with the one stored in the record, the call is established. Usually the MSISDNS up to 12 or 13 digit are used.
i.e. for 12 digit MSISDN (add-on-number range is 0000 to 9999, which users can choose) and for 13 digit MSISDN (000 to 999) and so on.

### Conclusion:

The invented concept of an add-on MSISDN is a simple yet effective technique, which allows a mobile user to avoid, unwanted calls. The functionality can also be implemented alternatively e.g. using an SMS based Solution for registering / de-registering of the add-on MSISDN instead of using USSD.

Advantages of the invention are that
- unwanted call filtering can be achieved,
- it allows flexibility to user in registering and revoking add-on MSISDN numbers on a need basis, using USSD string requests,
- service providers can charge the users depending on the usage of this feature.

The above-described call filtering service also works with incoming messages (as e.g. SMS =Short Message Service or MMS etc) being sent to a user ("called party").

## Claims

1. Method for filtering a call and/or message via telecommunication network to a called party with a telephone number (+49 172 3300001),
**characterized in that** if a call filtering and/or message filtering for a call and/or message to the telephone number (+49 172 3300001) of the called party is activated but a call filtering and/or message filtering for a call and/or message to an other number (+49 172 3300001 1234) of the called party, comprising the telephone number (+49 172 3300001) and an additional number ("1234"), is deactivated,
a call and/or message to the telephone number (+49 172 3300001) is blocked,
whereas a call and/or message to the other number (+49 172 3300001 1234) is not blocked.

2. Method according to claim 1,
**characterized in that** the a call and/or message contains an at least bi-directional voice communication of a calling party with the called party and/or that it is a request for voice communication.

3. Method according to claim 1,
**characterized in that** the a call and/or message contains or is an alphanumerical message to the called party, especially an SMS or MMS.

4. Method according to any of the preceding claims,
**characterized in that** the telecommunication network is a digital cellular mobile telecommunication network and that that the telephone number (+49 172 3300001) is an international telephone number (MSISDN) and that the called party is or comprises a mobile phone and/or subscriber identification card.

5. Method according to any of the preceding claims,
**characterized in that** for a party one or more other numbers are stored in the party's mobile station and/or subscriber identification card and/or in the telecommunication network.

6. Method according to any of the preceding claims,
**characterized in that** the other number and/or the telephone number is transferred to the telecommunication network and/ or to the calling party.

7. Method according to any of the preceding claims,
**characterized in that** a call and/or message to the called telephone number (+49 172 3300001) or other number (+49 172 3300001 1234) are blocked by a device of the called party, especially by a mobile telephone.

8. Method according to any of the preceding claims,
**characterized in that** a call and/or message to the called telephone number (+49 172 3300001) or other number (+49 172 3300001 1234) are blocked by a device of a telephone network, especially by a switching or routing device.

9. Method according to any of the preceding claims,
**characterized in that** a call and/or message that is blocked is not transmitted, whereas a call and/or message that is not blocked is transmitted.

10. Device for filtering calls via telecommunication network,
- with a store which stores a telephone number (+49 172 3300001) of a party and an additional number (+49 172 3300001 1234) of a party
- with a store for an indication flag indicating whether calls directed to the telephone number and/or the other number are to be transmitted,
- with a comparing device for comparing a number of incoming a call and/or message with the telephone number and with the other number and for deciding whether or not a call and/or message is to be blocked or not.

11. Device according to claim 10,
**characterized in that** it is a mobile telephone.

12. Device according to any of the claims 10-11,
**characterized in that** it is part of a telecommunication network.

13. Device according to any of the claims 10-12,
**characterized in that** the a call and/or message contains an at least bi-directional voice communication of a calling party with the called party and/or that it is a request for voice communication.

14. Device according to any of the claims 10-13,
**characterized in that** the a call and/or message contains or is an alphanumerical message to the called party, especially an SMS or MMS.

15. Device according to any of the claims 10-13,
**characterized in that** the telecommunication network is a digital cellular mobile telecommunication network and that that the telephone number (+49 172 3300001) is an international telephone number (MSISDN) and that the called party is or comprises a mobile phone and/or subscriber identification card.

16. Device according to any of the claims 10-15,
**characterized in that** for a party one or more other numbers are stored in the party's mobile station and/or subscriber identification card and/or in the telecommunication network.

17. Device according to any of the claims 10-16,
**characterized in that** the other number and/or the telephone number is transferred to the telecommunication network and/ or to the calling party.

18. Device according to any of the claims 10-17,
**characterized in that** a call and/or message to the called telephone number (+49 172 3300001) or other number (+49 172 3300001 1234) are blocked by a device of the called party, especially by a mobile telephone.

19. Device according to any of the claims 10-18,
**characterized in that** a call and/or message to the called telephone number (+49 172 3300001) or other number (+49 172 3300001 1234) are blocked by a device of a telephone network, especially by a switching or routing device.
